# EUROPÄISCHE PATENTSCHRIFT

(11) **EP 1 776 789 B1**
(45) Veröffentlichungstag und Bekanntmachung des Hinweises auf die Patenterteilung: **10.02.2010**
(21) Anmeldenummer: 05769888.8
(22) Anmeldetag: 27.07.2005
(51) Int. Cl.: H04B 17/00, H04W 72/08

(54) **VERFAHREN ZUM DURCHFÜHREN VON MESSUNGEN IN EINEM FUNK-KOMMUNIKATIONSSYSTEM**
METHOD FOR CONDUCTING MEASUREMENTS IN A RADIO COMMUNICATIONS SYSTEM
PROCEDE POUR EFFECTUER DES MESURES DANS UN SYSTEME DE RADIOCOMMUNICATION

(30) Priorität: 11.08.2004 DE 102004039155
(43) Veröffentlichungstag der Anmeldung: 25.04.2007
(73) Patentinhaber: Nokia Siemens Networks GmbH & Co. KG, 81541 München (DE)
(72) Erfinder: BREUER, Volker, 16727 Bötzow (DE); KRAUSE, Jörn, 12107 Berlin (DE); LAMPRECHT, Frank, 10439 Berlin (DE)
(86) Internationale Anmeldenummer: PCT/EP2005/053662
(87) Internationale Veröffentlichungsnummer: WO 2006/018368

(56) Entgegenhaltungen:
- US-A1- 2002 004 371
- "Universal Mobile Telecommunications System (UMTS); Introduction of Multimedia Broadcast/Multicast Service (MBMS) in the Radio Access Network (RAN); Stage 2 (3GPP TS 25.346 version 6.1.0 Release 6); ETSI TS 125 346" ETSI STANDARDS, EUROPEAN TELECOMMUNICATIONS STANDARDS INSTITUTE, SOPHIA-ANTIPO, FR, Bd. 3-R, Nr. V610, Juni 2004 (2004-06), XP014016838 ISSN: 0000-0001 in der Anmeldung erwähnt
- "Universal Mobile Telecommunications System (UMTS); Radio Resource Control (RRC) protocol specification (3GPP TS 25.331 version 6.2.0 Release 6); ETSI TS 125 331" ETSI STANDARDS, EUROPEAN TELECOMMUNICATIONS STANDARDS INSTITUTE, SOPHIA-ANTIPO, FR, Bd. 3-R2, Nr. V620, Juni 2004 (2004-06), XP014016835 ISSN: 0000-0001 in der Anmeldung erwähnt

## Beschreibung

Die Erfindung betrifft ein Verfahren zum Durchführen von Messungen in einem Funk-Kommunikationssystem sowie ein entsprechendes Teilnehmer-Endgerät, ein Basisstationssystem und ein Funk-Kommunikationssystem mit zumindest einem Basisstationssystem und einem Teilnehmer-Endgerät.

In Funk-Kommunikationssystemen erfolgt eine Kommunikation zwischen beteiligten Stationen über elektromagnetische Wellen, die über eine Luftschnittstelle übertragen werden. Je nach Funk-Kommunikationssystem können einzelne oder alle Teilnehmer-Endgeräte stationär oder mobil sein. Funk-Kommunikationssysteme, die eine Mobilität von Teilnehmer-Endgeräten unterstützen, werden allgemein als Mobilfunksysteme bezeichnet. Es existieren Mobilfunksysteme unterschiedlicher Mobilfunkstandards. Bekannt sind beispielsweise Mobilfunkstandards der zweiten Generation, wie beispielsweise IS-95 und GSM (Global System of Mobile Communications), oder der dritten Generation, wie beispielsweise CDMA2000 und UMTS (Universal Mobile Telecommunications System).

In der so genannten FDD-Variante (Frequency Division Duplex) des UMTS-Standards nutzen Teilnehmer-Endgeräte im so genannten Cell-FACH (Fast Access Channel)-Status in einer Funkzelle gemeinsam einen gleichen Funkkanal, wobei eine Datenübertragungen zu den unterschiedlichen Teilnehmer-Endgeräten im Codemultiplex und Zeitmultiplex erfolgt. Üblicherweise weist ein Teilnehmer-Endgerät aus Kostengründen nur einen Hochfrequenzempfänger auf, der auf den Empfang in lediglich einem Frequenzband einstellbar ist. Um im Cell-FACH-Status auf einem Kanal in einem anderen Frequenzband als das des aktuell empfangenen Kanals messen zu können, benötigt der Empfänger des Teilnehmer-Endgerätes gewisse Zeiträume, in denen er auf das jeweils andere Frequenzband umgeschaltet werden kann. Erforderlich sind diese Messungen beispielsweise, um einen Kanal einer anderen Funkzelle zu empfangen, die demselben Mobilfunkssystem angehört, so genannte Inter-Frequenz-Messungen, oder die einem anderen Mobilfunksystem angehört, so genannte Inter-System-Messungen. Die Zeiträume werden im UMTS-FDD-Standard als Measurement Occasions bezeichnet.

Das Konzept der Measurement Occasions sieht vor, dass Datenübertragungen von einer Basisstation auf einem Kanal zu einem Teilnehmer-Endgerät während zuvor festgelegter Zeiträume unterbrochen werden. Die Measurement Occasions werden unter Einbeziehung von spezifischen Eigenschaften des Teilnehmer-Endgerätes, wie beispielsweise eine dem Teilnehmer-Endgerät von der Netzseite zugeordnete Identifikationsnummer bestimmt.

Bei einer Vielzahl von Teilnehmer-Endgeräten in einer Funkzelle wird versucht, die Zeiträume, in denen die jeweiligen Teilnehmer-Endgeräte Messungen von Kanälen benachbarter Funkzellen durchführen, möglichst harmonisch über der Zeit zu verteilen, sodass die Zeiträume der Teilnehmer-Endgeräte zu jeweils unterschiedlichen Zeitpunkten beginnen. Da vor und nach einem derartigen Zeitraum die Teilnehmer-Endgeräte jeweils mit einer erhöhten Sendeleistung senden, dies wird auch als compressed-mode bezeichnet, wird durch die zeitliche Streuung der Zeiträume eine Überhöhung der Interferenz aufgrund einer gleichzeitigen Erhöhung der Sendeleistung durch eine Vielzahl von Teilnehmer-Endgeräten vermieden.

Die Festlegung der Measurement Occasions ist bezüglich der FDD-Variante des UMTS-Standards unter anderem in Kapitel 8.5.11 der technischen Spezifikation 3GPP TS 25.331 V6.2.0, Radio Resource Control (RRC), Protocol Specification (Release 6), beschrieben. Der Zeitpunkt des Beginns einer Measurement Occasion ist demnach von einem individuellen Identifikator des Teilnehmer-Endgerätes innerhalb der Funkzelle, dem so genannten C-RNTI (Cell Radio Network Temporary Identity), abhängig. Der C-RNTI wird gemäß Kap. 6.1 der technischen Spezifikation 3GPP TS 25.301 V6.0.0, Radio Interface Protocol Architecture (Release 6), einem Teilnehmer-Endgerät von einer steuernden Basisstationssteuerung CRNC (Controlling Radio Network Controller) zugewiesen.

In Mobilfunksystemen, wie beispielsweise den oben genannten GSM- und UMTS-Systemen, ist die Einführung so genannter MBMS (Multimedia Broadcast Multicast Service)-Dienste vorgesehen. Bezüglich des UMTS-Standards ist die Implementierung dieses Dienstes unter anderem in der technischen Spezifikation 3GPP TS 25.346 V6.1.0, Introduction of the Multimedia Broadcast Multicast Service (MBMS) in the Radio Access Network (RAN); Stage 2 (Release 6), beschrieben. Weitergehende Informationen sind darüber hinaus den entsprechenden technischen Spezifikationen 3GPP TS 22.146 V6.5.0, TS 23.246 V6.3.0 und TS 29.846 V1.5.0 entnehmbar.

Während einer so genannten MBMS-Session überträgt eine Basisstation Daten über einen gemeinsam genutzten Kanal gleichzeitig an mehrere Teilnehmer-Endgeräte in einer Funkzelle der Basisstation. Nach der FDD-Variante des UMTS-Standards können sich Teilnehmer-Endgeräte während einer MBMS-Session ebenfalls im Cell-FACH-Status befinden. Dabei ist vorgesehen, dass solche Teilnehmer-Endgeräte unabhängig davon, ob sie sich an einer MBMS-Session beteiligen oder nicht, die Measurement Occasions berücksichtigen, um während dieser Zeiträume die notwendigen Messungen auf anderen Kanälen durchführen zu können.

Im Gegensatz zu einer Übertragung von individuellen Daten zu einem einzelnen, im Cell-FACH-Status befindlichen Teilnehmer-Endgerät, bei dem eine wiederholte Übertragung beispielsweise gemäß einem bekannten ARQ-Mechanismus von dem Teilnehmer-Endgerät angefordert werden kann, ließe sich der Verlust von auf dem jeweiligen Kanal übertragenen Daten während einer MBMS-Session nur mit sehr großem Aufwand vermeiden. Dies könnte beispielsweise durch eine wiederholte Übertragung der Daten aufgrund von Rückmeldungen der Teilnehmer-Endgeräte oder eine jeweilige Unterbrechung der Datenübertragung während der individuellen Measurement Occasions erfolgen. Nachteilig würde hierdurch jedoch die gesamte Übertragungskapazität des Kanals beschränkt und die Vorteile einer Punkt-zu-Multipunkt-Übertragung stark in Mitleidenschaft gezogen werden.

Der Erfindung liegt die Aufgabe zugrunde, ein Verfahren sowie Komponenten eines Funk-Kommunikationssystems anzugeben, die Messungen von Kanälen durch Teilnehmer-Endgeräte bei einer reduzierten Wahrscheinlichkeit des Verlustes von Daten ermöglichen.

Diese Aufgabe wird durch die Merkmale der Verfahrens, des Teilnehmer-Endgerätes sowie des Basisstationssystems gemäß den nebengeordneten Patentansprüchen gelöst. Vorteilhafte Ausführungsformen und Weiterbildungen der Erfindung sind Gegenstand abhängiger Ansprüche.

Erfindungsgemäß werden von einem Teilnehmer-Endgerät Signale eines ersten Dienstes in einem ersten Kanal empfangen. Dies kann entsprechend der einleitenden Beschreibung im Rahmen eines bestehenden MBMS-Dienstes erfolgen. Zur Durchführung von Messungen weiterer Kanäle, beispielsweise benachbarter Funkzellen für die Vorbereitung einer Interzell- bzw. Intersystem-Verbindungsweiterschaltung, unterbricht das erste Teilnehmer-Endgerät den Empfang der Signale, wobei die Unterbrechung zeitgleich zu einer entsprechenden Unterbrechung eines weiteren Teilnehmer-Endgerätes erfolgt.

Das erfindungsgemäße Verfahren nutzt vorteilhaft die Tatsache, dass die einen oder mehrere MBMS-Dienste empfangenden Teilnehmer-Endgeräte selbst keine oder nur wenige Signale in Aufwärtsrichtung zu der die Signale aussendenden Basisstation übertragen, wodurch keine nachteilige Interferenzüberhöhung vor und nach der Unterbrechung auftritt. Um einen Verlust von Daten während der zeitgleichen Unterbrechung zu vermeiden, kann die Basisstation vorteilhaft für den Zeitraum der Unterbrechung des Empfangs in gleicher Weise die Aussendung von Signalen unterbrechen. Da beispielsweise für alle einen Dienst empfangenden Teilnehmer-Endgeräte eine zeitgleiche Unterbrechung erfolgt, ist eine hierdurch verursachte Einschränkung der Übertragungskapazität nur sehr gering. Die Unterbrechung des Empfangs kann nach der Erfindung beispielsweise entsprechend der einleitend beschriebenen Vorgehensweise im Cell-FACH-Status erfolgen, wobei in diesem Fall jedoch keine individuelle Festlegung der Unterbrechung für die Teilnehmer-Endgeräte erfolgt, sondern vielmehr alle Teilnehmer-Endgeräte eine zeitgleiche Unterbrechung ermitteln. Alternativ hierzu ist jedoch auch eine von der Basisstation bzw. der Netzseite gesteuerte Unterbrechung denkbar, bei der die Basisstation die Aussendung von Daten unterbricht und den empfangenden Teilnehmer-Endgeräten zuvor beispielsweise den Zeitpunkt und die Dauer der Unterbrechung signalisiert.

Gemäß der Erfindung erfolgt die Unterbrechung des Empfangs von Signalen des zumindest einen ersten Dienstes dienstindividuell. Dies bedeutet für das einleitend beschriebene System, dass für jeden Dienst, zu dem die Basisstation Signale aussendet, eine individuelle Unterbrechung für die jeweils empfangenden Teilnehmer-Endgeräte festgelegt wird. Dies kann unabhängig von der Tatsache, dass die Mehrzahl von Diensten in nur einem gemeinsam genutzten Kanal oder in einer Anzahl von Kanälen, beispielsweise in einem jeweiligen Kanal, übertragen werden. Vorteilhaft kann durch diese Ausgestaltung beispielsweise die Sendeleistung der Basisstation verringert werden, wenn zu jedem Zeitpunkt in nur einem Teil der aktuell bestehenden Dienste Signale übertragen werden, während in dem anderen Teil eine Unterbrechung der Übertragung erfolgt, bzw. die Anzahl der gleichzeitig unterstützbaren Dienste oder der versorgbaren Teilnehmer-Endgeräte erhöht werden. Alternativ zu einer Verringerung der gesamten Sendeleistung können Daten der individuellen Dienste auch mit jeweils einer vergleichsweise höheren Sendeleistung übertragen werden, wodurch eine geringere Fehlerschutzkodierung und daraus folgend eine höhere Übertragungsrate ermöglicht wird.

Der Erfindung zufolge erfolgt die Unterbrechung des Empfangs abhängig von einer dienstindividuellen Information. In Abwandlung der einleitend beschriebenen Standardprozedur zum Ermitteln des Zeitpunktes der Unterbrechung auf Basis der individuellen C-RNTI könnte die Unterbrechung erfindungsgemäß unabhängig von dieser C-RNTI, jedoch abhängig von einer den jeweiligen Dienst identifizierenden Information von dem Teilnehmer-Endgerät ermittelt werden.

Gemäß einer weiteren Ausgestaltung erfolgt die Unterbrechung des Empfangs von Signalen mehrerer Dienste zeitgleich. Dies ist insbesondere vorteilhaft, wenn Teilnehmer-Endgeräte parallel Daten mehrerer Dienste empfangen können. In diesem Fall würde für ein Teilnehmer-Endgerät eine gleichzeitige Unterbrechung des Empfangs mehrerer Dienste zu einem erhöhten Verlust von Daten führen, wenn beispielsweise entsprechend der vorherigen Ausgestaltung die Basisstation für einen Dienst die Übertragung unterbrechen, für einen oder mehrere weitere Dienste jedoch weiterhin Daten aussenden würde. Die Daten der weiteren Dienste könnte das Teilnehmer-Endgerät entsprechend nicht empfangen und gegebenenfalls auch nicht aus weiteren empfangenen Daten rekonstruieren.

Die den Dienst identifizierende Information wird den Teilnehmer-Endgeräten gemäß einer weiteren Ausgestaltung von einer Basisstationssteuerung über die versorgende Basisstation signalisiert. Die Signalisierung kann dabei individuell für jedes Teilnehmer-Endgerät oder mittels an alle empfangenden Teilnehmer-Endgeräte gerichtete Rundsendenachrichten in der Funkzelle der versorgenden Basisstation erfolgen. Diese Ausgestaltungen, allein oder in Kombination miteinander, ermöglichen vorteilhaft eine einfache Implementierung in bestehenden Systemen, wobei lediglich eine Modifizierung des Algorithmus zur Ermittlung der Unterbrechung in den Teilnehmer-Endgeräten im Vergleich zu dem im einleitend beschriebenen Cell-FACH-Status verwendeten Algorithmus erforderlich ist.

Ein erfindungsgemäßes Teilnehmer-Endgerät sowie ein Basisstationssystem eines Funk-Kommunikationssystems weisen jeweils entsprechende Mittel zum Durchführen des erfindungsgemäßen Verfahrens in den beschriebenen Ausgestaltungen auf. Nachfolgend wird die Erfindung anhand der in den Figuren dargestellten beispielhaften Situation näher beschrieben. Dabei zeigen
- FIG 1: Komponenten eines Funk-Kommunikationssystems in einer beispielhaften Anordnung,
- FIG 2: Eine Auswahl von Komponenten des Systems der FIG 1 mit beispielhaft dargestellten Mitteln,
- FIG 3: Ein Ablauf- und Signalisierungsdiagramm, und
- FIG 4: a und b mit beispielhaften Darstellungen einer unter- schiedlichen zeitlichen Anordnung von Unterbrechungen bei mehreren Diensten.

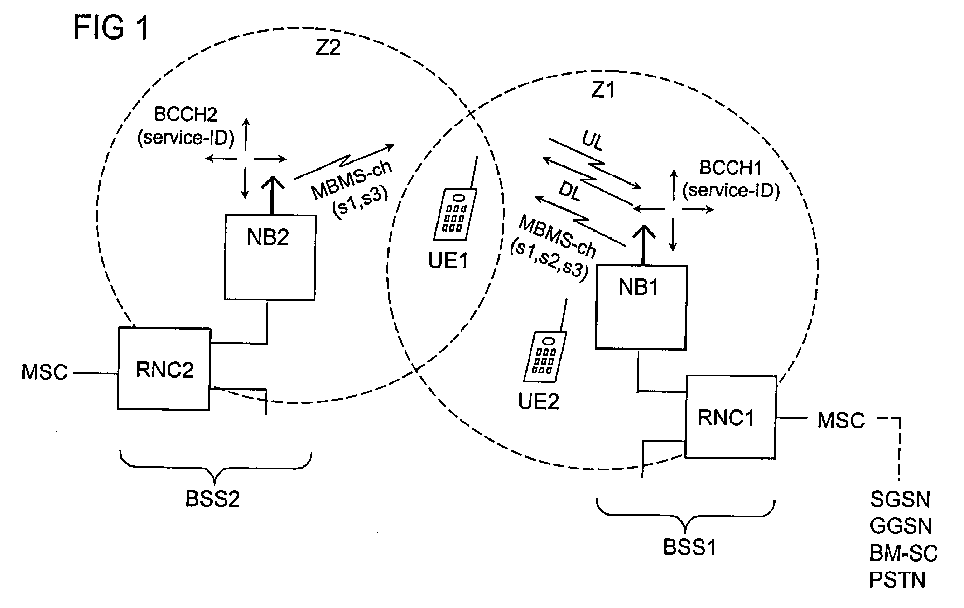

In dem Beispiel der FIG 1 befindet sich ein erstes Teilnehmer-Endgerät UE1 in einem Überlappungsbereich zweier Funkzellen Z1, Z2, die von einer jeweiligen Basisstation NB1 bzw. NB2 mit funktechnischen Ressourcen versorgt werden. Zur Vereinfachung des Beispiels wird angenommen, dass die Basisstationen nur jeweils eine Funkzelle mit funktechnischen Ressourcen versorgen, die Erfindung kann jedoch entsprechend nachfolgenden Erläuterungen in gleicher Weise bei jeweils mehrere Funkzellen bzw. Sektoren versorgenden Basisstationen eingesetzt werden. Die Basisstationen NB1, NB2 sind jeweils Teil eines so genannten Basisstationssystems BSS1 bzw. BSS2 bestehend aus jeweils einer Anzahl von Basisstationen und einer Basisstationssteuerung RNC1, RNC2 (Radio Network Controller). Die Basisstationssteuerungen RNC1, RNC2 wiederum sind über Vermittlungseinrichtungen MSC und/oder nicht dargestellte Paketvermittlungsknoten SGSN (Serving GPRS Support Node) und GGSN (Gateway GPRS Support Node) mit MBMS-Dienstzentralen BM-SC (Broadcast-Multicast Service Center) und leitungsgebundenen, beispielsweise dem PSTN, und/oder paketvermittelten Netzen, beispielsweise dem Internet, verbunden. Ein Referenz-Architektur-Modell mit diesen Komponenten sowie Erläuterungen hierzu sind beispielsweise dem Kapitel 4.2 der technischen Spezifikation TS 23.246 V6.3.0 entnehmbar.

Die Basisstationssteuerungen RNC1, RNC2 können dabei mit dem gleichen oder unterschiedlichen Vermittlungsknoten verbunden sein. Eine Verbindungsweiterschaltung zwischen zwei zu einem gleichen System gehörenden Basisstationen ist allgemein als Intra-System-Handover, und eine Verbindungsweiterschaltung zwischen Basisstationen unterschiedlicher Systeme, beispielsweise GSM und UMTS, als Inter-System-Handover bekannt. Besteht keine aktive Verbindung zu einer Basisstation, sondern beispielsweise nur ein passiver Empfang von Daten eines Dienstes, so kann ein Teilnehmer-Endgerät in gleicher Weise autonom eine so genannte Funkzell-Wiederauswahl (engl. cell reselection) durchführen und damit die Zuordnung zu einer Basisstation für einen Empfang von Daten ändern.

In dem Beispiel der FIG 1 sendet die erste Basisstation NB1 in einer Abwärtsrichtung DL (Downlink) in einem Kanal MBMS-ch Daten von drei aktuell aufgebauten Diensten s1, s2, s3. Derartige Dienste können beispielsweise den einleitend beschriebenen MBMS-Diensten entsprechen. Alternativ zu der Übertragung der Daten der drei Dienste s1, s2, s3 in lediglich einem Kanal können diese auch in einer der Anzahl Dienste entsprechenden Anzahl Kanäle übertragen werden. Die benachbarte zweite Basisstation NB2 sendet in gleicher Weise Daten eines ersten s1 und eines dritten Dienstes s3 in einem entsprechenden Kanal MBMS-ch. Von beiden Basisstationen NB1, NB2 wird beispielsweise zusätzlich die aktuelle und/oder mögliche Unterstützung der jeweiligen Dienste s1, s2, s3 mittels spezieller Informationselemente service-ID in einem jeweiligen Rundsendekanal BCCH1 bzw. BCCH2 (Broadcast Control Channel) innerhalb der versorgten Funkzellen Z1 bzw. Z2 ausgesendet.

Aufgrund der Bewegung der Teilnehmer-Endgeräte UE1, UE2 und einer dadurch erforderlichen Verbindungsweiterschaltung bzw. Funkzell-Wiederauswahl müssen diese in gewissen zeitlichen Abständen Messungen bezüglich von Übertragungsparametern von/zu anderen als der aktuell versorgenden Basisstation durchführen. Hierzu unterbricht das beispielhaft betrachtete erste Teilnehmer-Endgerät UE1 den Empfang von Daten des ersten Dienstes s1 der ersten Basisstation NB1, um Messungen auf dem Rundsendekanal BCCH2 der benachbarten zweiten Basisstation NB2 durchzuführen. Derartige Messungen sind durch den jeweiligen Standard vorgegeben und können beispielsweise eine Signalfeldstärke betreffen. Würde sich das erste Teilnehmer-Endgerät UE1 aufgrund von Bewegung von der ersten Basisstation NB1 entfernen und der zweiten Basisstation NB2 annähern, so wäre eine Verbindungsweiterschaltung bzw. Funkzell-Wiederauswahl dieser zweiten Basisstation NB2 vorteilhaft, da auch die zweite Basisstation NB2 den aktuell von dem ersten Teilnehmer-Endgerät UE1 empfangenen ersten Dienst s1 unterstützt.

Gemäß einleitend genannter Dokumente zum Stand der Technik der FDD-Variante des UMTS-Mobilfunksystems ist vorgesehen, für die Übertragung von Daten von MBMS-Diensten den Cell-FACH-Status zu nutzen. Nach dessen Definition in Kapitel 8.5.11 der technischen Spezifikation TS 25.331 V6.2.0 werden Measurement Occasions in Abhängigkeit von den Teilnehmer-Endgeräten individuell zugeordneten C-RNTI bestimmt, wobei der C-RNTI in Kap. 6.1 der technischen Spezifikation TS 25.301 V6.0.0 definiert ist. Die Daten der MBMS-Dienste werden in dem FACH übertragen, der auf den S-CCPCH (Secondary-Common Control Physical Channel) abgebildet wird.

Übertragen auf die beschriebene Situation in der FIG 1 würde dem ersten und zweiten Teilnehmer-Endgerät UE1, UE2 ein individueller C-RNTI von der steuernden Basisstationssteuerung (CRNC - Controlling Radio Network Controller), beispielsweise der ersten Basisstationssteuerung RNC1, zugeordnet werden, und in der Folge die Teilnehmer-Endgeräte zu unterschiedlichen Zeitpunkten den Empfang von Signalen der ersten Basisstation NB1 für den Empfang von Signalen der zweiten Basisstation NB2, einhergehend mit den vorangehend beschriebenen Nachteilen, unterbrechen.

Nach der Erfindung werden für den Fall, dass die Teilnehmer-Endgeräte UE1, UE2 Daten eines ersten MBMS-Dienstes s1 empfangen, die Unterbrechungen bzw. die Measurement Occasions nicht mehr Teilnehmer-Endgeräte-spezifisch, d.h. in Abhängigkeit von dem zugeordneten C-RNTI, sondern unabhängig von dem zugeordneten C-RNTI bestimmt. Dies bedeutet, dass ein Teilnehmer-Endgerät, wenn es Daten eines MBMS-Dienstes empfängt, die Unterbrechungen auf Basis eines anderen als dem aus obigen Dokumenten bekannten Algorithmus bestimmt.

Dieser Wechsel zwischen unterschiedlichen Algorithmen zur Bestimmung der Unterbrechungen kann alternativ auch erst erfolgen, wenn zumindest zwei Teilnehmer-Endgeräte Daten eines MBMS-Dienstes empfangen. Eine Aufforderung zum Wechsel der Algorithmen und/oder die Tatsache, das zumindest zwei Teilnehmer-Endgeräte Daten eines MBMS-Dienstes empfangen, kann den Teilnehmer-Endgeräten von dem Basisstationssystem signalisiert werden.

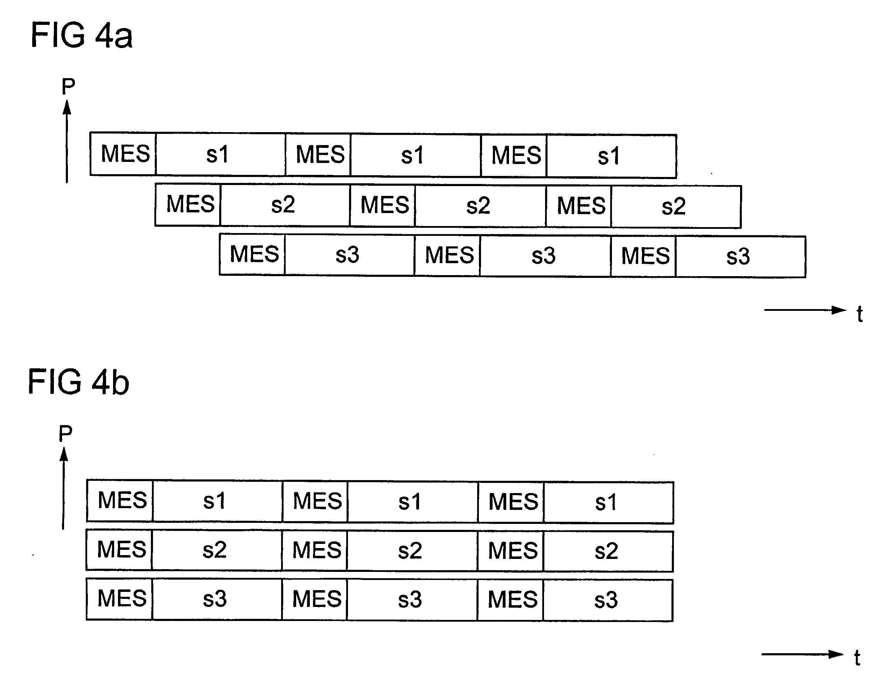

In dem Beispiel der FIG 1 überträgt die erste Basisstation NB1 Daten von drei MBMS-Diensten s1, s2, s2 in einem Kanal MBMS-ch, beispielsweise einem FACH in einem S-CCPCH. Sofern die Teilnehmer-Endgeräte UE1, UE2 nur jeweils einen der drei Dienste s1, s2, s3 empfangen können ist es sinnvoll, die Unterbrechungen dienstindividuell zu gestalten. Hierdurch können, wie nachfolgend noch zu der FIG 4 erläutert wird, durch die netzseitig beeinflussbare zeitliche Verteilung der Unterbrechungen beispielsweise Interferenzen verringert bzw. die Datenrate erhöht werden. Nach der Erfindung wird der Algorithmus für die Bestimmung der Unterbrechungen in den Teilnehmer-Endgeräten den jeweiligen Dienst, dessen Daten das jeweilige Teilnehmer-Endgerät UE1,UE2 empfängt, bzw. eine dienstindividuelle Information berücksichtigen.

Alternativ zu einer Nutzung eines unterschiedlichen zu dem bekannten und im Cell-FACH-Status verwendeten Algorithmus zur Bestimmung der Unterbrechung kann die zeitliche Verteilung der Unterbrechungen auch von dem Basisstationssystem den Teilnehmer-Endgeräten vorgegeben werden. Dies kann beispielsweise derart erfolgen, dass zu einem jeweils aufgebauten MBMS-Dienst die zeitliche Steuerung der Unterbrechung mittels einer Inband-Signalisierung oder einer Signalisierung in einem parallel aufgebauten korrespondierenden Signalisierungskanal zu den Teilnehmer-Endgeräten übertragen wird. In diesem Fall würden die Teilnehmer-Endgeräte den bekannten Algorithmus des Cell-Fach-Status nicht verwenden, sondern die Steuerung der Unterbrechung entsprechend der empfangenen Signalisierung anpassen.

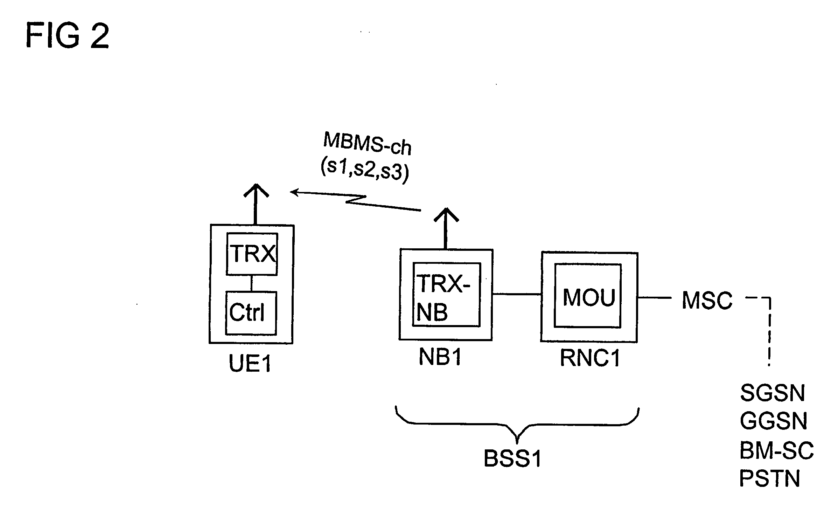

In der FIG 2 sind beispielhaft Mittel in den verschiedenen Komponenten des Mobilfunksystems der FIG 1 dargestellt, die eine Umsetzung des erfindungsgemäßen Verfahrens ermöglichen, wobei jede der Komponenten neben den dargestellten eine Vielzahl bekannter weiterer für den Betrieb erforderlicher, jedoch nicht dargestellter, Mittel aufweist. In der ersten Basisstationssteuerung RNC1 des ersten Basisstationssystems BSS1 sind Mittel MOU verwirklicht, die einen Aufbau und ein Auslösen von MBMS-Diensten sowie eine Übertragung von Daten und zugehörigen Signalisierungen dieser Dienste ermöglichen. Daten und Signalisierungen zu den MBMS-Diensten s1,s2,s3 werden von einer Sende-/Empfangseinrichtung TRX-NB in der ersten Basisstation NB1 in einem Kanal MBMS-ch, beispielsweise dem FACH, über eine oder mehrere Antennen der ersten Basisstation NB1 ausgesendet. Das diese von der ersten Basisstation NB1 ausgesendeten Signale empfangende erste Teilnehmer-Endgerät UE1 weist ebenfalls eine mit zumindest einer Antenne verbundene Sende-/Empfangseinrichtung TRX zum Empfangen dieser Signale, sowie eine Steuereinrichtung Ctrl auf, die eine Unterbrechung des Empfangs des Kanals MBMS-ch und einen Empfang eines anderen Kanals, beispielsweise der nicht dargestellten zweiten Basisstation NB2, steuert.

Allgemein wird bei MBMS-Diensten zwischen dem so genannten Multicast-Modus, zu dessen Nutzung ein Teilnehmer registriert sein muss, und dem Broadcast-Modus, zu dessen Nutzung keinerlei Registrierung erforderlich ist, unterschieden. Die verschiedenen Phasen vom Aufbau bis zum Abbau eines Multicast- oder Broadcast-Dienstes sind in den Kapiteln 4.4.1 ff. und 4.4.3 ff. der technischen Spezifikation TS 23.246 V6.3.0 beispielhaft dargestellt und beschrieben.

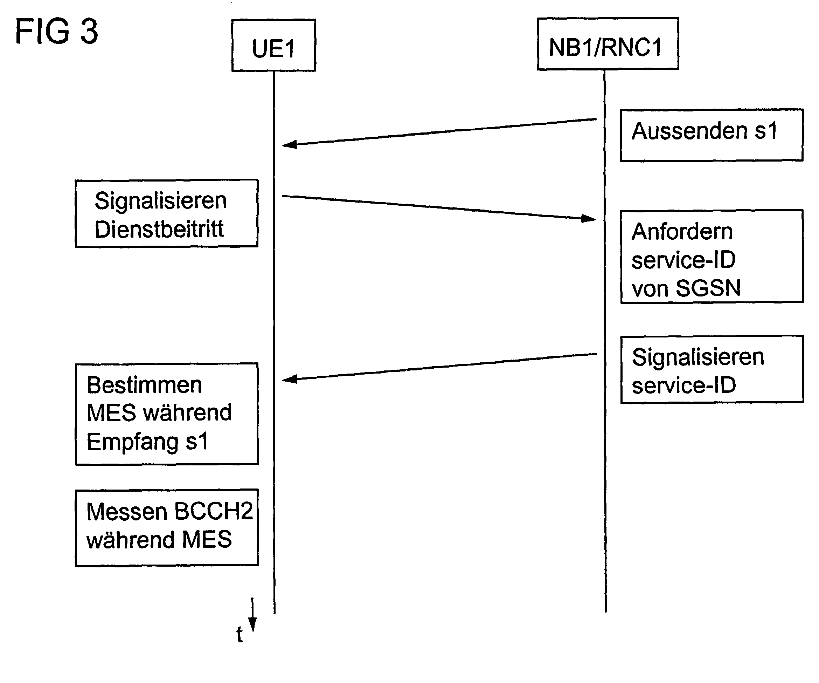

In der FIG 3 ist ein abstrahiertes und unterschiedliche Schichten betreffendes Ablaufdiagramm dargestellt, wobei beispielhaft nur der Multicast-Modus betrachtet wird. Eine entsprechende Prozedur ohne Signalisierung des Beitritts zu einem Dienst ist für den Broadcast-Modus durchführbar.

Ausgehend von der Tatsache, dass der Teilnehmer des ersten Teilnehmer-Endgerätes UE1 den MBMS-Multicast-Dienst s1, beispielsweise eine Videoübertragung eines Fußballspiels, subskribiert hat, empfängt das erste Teilnehmer-Endgerät Signalisierungen des Basisstationssystems NB1/RNC1, dass dieser Dienst s1 aktuell verfügbar ist, das so genannte service announcement. Ist der Teilnehmer an dem Empfang dieses Dienstes s1 interessiert, so signalisiert das erste Teilnehmer-Endgerät UE1 nach Eingabe durch den Teilnehmer dem Basisstationssystem NB1/RNC1 den Beitritt zu zumindest diesem Dienst s1, das so genannte joining. Nach dem Kapitel 8.2.10 der technischen Spezifikation TS 25.346 V6.1.0 fordert nachfolgend die Basisstationssteuerung RNC1 den Dienst bzw. eine Dienst-Identifikation service-ID von dem SGSN an, und der SGSN antwortet auf diese Anfrage mit einer Übertragung einer vollständigen Liste von MBMS-Diensten, denen dieser Teilnehmer beigetreten ist. Eine Liste dieser Dienste wird nach Empfang von dem SGSN in der Basisstationssteuerung RNC1 gespeichert.

Im Rahmen des service announcement oder nach erfolgtem Beitritt zu einem Dienst werden dem Teilnehmer-Endgerät Dienst-Identifikationen service-ID aller in der Funkzelle verfügbaren MBMS-Dienste s1,s2,s3 oder nur des beigetretenen MBMS-Dienstes s1 von dem Basisstationssystem NB1/RNC1 signalisiert. Dies kann beispielsweise entsprechend dem Kapitel 8.3.2 der technischen Spezifikation TS 25.346 V6.1.0 erfolgen. Für die Signalisierung wird beispielsweise der so genannte MCCH (MBMS point-to-multipoint Control Channel) genutzt werden, der auf den FACH abgebildet ist, der seinerseits auf dem S-CCPCH liegt. Da der MCCH von allen einen Dienst empfangenden Teilnehmer-Endgeräten empfangen wird, kann die Signalisierung aufwandsgünstig erfolgen. Das Teilnehmer-Endgerät UE1 bestimmt unter Berücksichtigung der Dienst-Identifikation service-ID des beigetretenen Dienstes s1 die zeitliche Struktur der Unterbrechungen MES des Empfangs von Daten des beigetretenen Dienstes s1 zum Durchführen von Messungen auf beispielsweise dem Rundsendekanal BCCH2 der zweiten Basisstation NB2 der benachbarten Funkzelle Z2.

Neben der Übertragung von Daten eines MBMS-Dienstes in dem Multicast-Modus in einem für alle empfangenden Teilnehmer-Endgeräte gemeinsamen Kanal ist auch eine Nutzung eines für jedes Teilnehmer-Endgerät individuell aufgebauten Kanals nach dem MBMS-Standard möglich. Die Entscheidung über einen gemeinsamen oder individuellen Kanal wird netzseitig nach dem Beitritt des Teilnehmers zu einem Dienst entschieden. Im Fall einer Zuordnung eines individuellen Kanals würde ein Teilnehmer-Endgerät entsprechend dem Vorgehen im Cell-FACH-Status die Unterbrechungen abhängig von dem zugeordneten C-RNTI oder entsprechend dem vorhergehend beschriebenen Verfahren auf Basis der Dienst-Identifikation bestimmen. Sofern mehrere individuelle Kanäle für einen Dienst mehreren Teilnehmer-Endgeräten zugeordnet sind, wären im Sinne der Erfindung zeitgleiche Unterbrechungen aller diesen Dienst empfangender Teilnehmer-Endgeräte vorteilhaft.

In den FIG 4a und 4b ist schließlich eine beispielhafte zeitliche Struktur der Unterbrechungen MES für drei parallel aufgebaute Dienste s1,s2,s3, wie sie von empfangenden Teilnehmer-Endgeräten bestimmt würden, dargestellt. Als Zeitmaßstab wird beispielhaft eine Rahmenlänge von 10ms entsprechend dem FDD-Modus des UMTS-Standards gewählt. Dies bedeutet, dass jeweils eine Unterbrechung mit der Länge eines Rahmens nach zwei Rahmen mit Daten des jeweiligen Dienstes s1,s2,s3 folgt. In dem Beispiel der FIG 4a wird angenommen, dass Teilnehmer-Endgeräte nur jeweils Daten eines Dienstes empfangen können. In diesem Fall bestimmen aufgrund eines entsprechend konfigurierten Algorithmus auf Basis der signalisierten Dienste-Identifikation Teilnehmer-Endgeräte, die Daten eines ersten Dienstes s1 empfangen, eine unterschiedliche Zeitlage für die Unterbrechung MES als beispielsweise Teilnehmer-Endgeräte, die Daten eines zweiten Dienstes s2 empfangen, bzw. als Teilnehmer-Endgeräte, die Daten eines dritten Dienstes s3 empfangen. Der Algorithmus würde beispielsweise jeweils die Rahmennummern (SFN - System Frame Number) angeben, in denen eine Unterbrechung MES des Empfangs und Messungen von weiteren Kanälen vorgesehen ist.

Während der Unterbrechungen MES des Empfangs durch die Teilnehmer-Endgeräte kann die Daten der drei beispielhaften Dienste s1,s2,s3 aussendende Basisstation in gleicher Weise die Aussendung von Signalen in den jeweiligen Diensten s1,s2,s3 unterbrechen. Die dargestellte zeitliche Verteilung der Unterbrechungen MES ermöglicht somit, dass von der Basisstation in jedem Rahmen Daten von nur jeweils zwei der drei Dienste s1,s2,s3 ausgesendet werden müssen. Hierdurch kann vorteilhaft die Sendeleistung P und damit die Interferenz in der Funkzelle bzw. Interferenzbeeinflussung benachbarter Funkzellen gesenkt werden. Alternativ hierzu kann auch die Sendeleistung P um die nicht genutzte Sendeleistung angehoben werden, wodurch vorteilhaft eine niedrigere Fehlerschutzkodierung verwendet und daraus folgend eine höhere Datenrate erzielt werden kann.

Bei beispielsweise vier parallel aufgebauten Diensten können die Unterbrechungen entsprechend derart innerhalb der Folge von Rahmen eingeordnet werden, dass in nur jeweils drei der vier Dienste Daten von der Basisstation ausgesendet werden müssen. Es muss jedoch sichergestellt werden, dass den empfangen Teilnehmer-Endgeräten in jedem Dienst Unterbrechungen mit einer hinreichenden Periodizität zur Verfügung stehen.

Sofern ein Teilnehmer-Endgerät Daten in mehr als nur einem Dienst empfängt, würde es bei der beispielhaften zeitlichen Struktur der FIG 4a dazu kommen, dass das Teilnehmer-Endgerät aufgrund der unterschiedlichen relativen zeitlichen Lage der Unterbrechungen und der gleichzeitigen Unterbrechung der Aussendung durch die Basisstation Daten, und bei Berücksichtigung nur einer der bestimmten Unterbrechungen, Daten zumindest eines Dienstes nicht vollständig empfangen kann. In diesem Fall ist eine zeitliche Struktur der Unterbrechungen entsprechend der Darstellung in FIG 4b vorteilhaft. Nach der FIG 4b werden die Unterbrechungen MES von den empfangenden Teilnehmer-Endgeräten derart bestimmt, dass sie zeitgleich innerhalb der Folge von Rahmen liegen. Somit könnte die Basisstation vorteilhaft von der Aussendung von Daten in allen Diensten bzw. Kanälen während dieser Unterbrechungen MES absehen, da keines der empfangenden Teilnehmer-Endgeräte Daten in diesen Zeiträumen empfangen könnte.

Die Erfindung gemäß dem Inhalt der Patentansprüche lässt neben der vorangehenden Beschreibung von Ausführungsbeispielen eine Vielzahl von Abwandlungen und Kombinationen von Merkmalen mit jeweils vorteilhaften Wirkungen zu. Derartige Veränderungen bei der Implementierung der Erfindung liegen im Kenntnisbereich eines Fachmanns auf dem Gebiet der Funk-Kommunikationstechnik und sind Bestandteil dieser Offenbarung.

## Patentansprüche

1. Verfahren zum Durchführen von Messungen durch zumindest ein Teilnehmer-Endgerät (UE1) eines Funk-Kommunikationssystems, bei dem
von dem Teilnehmer-Endgerät (UE1) Signale zumindest eines ersten Dienstes (s1,s2,s3) in einem ersten Kanal empfangen werden, und
von dem Teilnehmer-Endgerät (UE1,UE2) der Empfang der Signale für die Durchführung von Messungen auf zumindest einem zweiten Kanal unterbrochen wird, wobei die Unterbrechung (MES) zeitgleich zu einer Unterbrechung (MES) zumindest eines ebenfalls Signale des ersten Dienstes (s1) empfangenden weiteren Teilnehmer-Endgerätes (UE2) erfolgt, und **dadurch characterisiert, dass** von den Teilnehmer-Endgeräten (UE1,UE2) der Zeitpunkt der Unterbrechung abhängig von zumindest einer dienstindividuellen Information des zumindest einen ersten Dienstes (s1,s2,s3) ermittelt wird.

2. Verfahren nach Anspruch 1, bei dem
die Unterbrechung (MES) des Empfangs von Signalen des zumindest einen ersten Dienstes (s1,s2,s3) dienstindividuell erfolgt.

3. Verfahren nach Anspruch 1, bei dem
die Unterbrechung (MES) des Empfangs von Signalen zumindest des ersten (s1) und eines zweiten Dienstes (s2) in dem ersten Kanal zeitgleich erfolgt.

4. Verfahren nach dem vorhergehenden Anspruch, bei dem dem Teilnehmer-Endgerät (UE1) die dienstindividuelle Information von einem Basisstationssystem des Funk-Kommunikationssystems signalisiert wird.

5. Verfahren nach dem vorhergehenden Anspruch, bei dem von dem Basisstationssystem dienstindividuelle Informationen der von dem Teilnehmer-Endgerät (UE1) aktuell empfangenen Dienste (s1,s2,s3) individuell oder mittels zumindest einer Rundsendenachricht zu dem Teilnehmer-Endgerät (UE1) signalisiert wird.

6. Teilnehmer-Endgerät (UE1) eines Funk-Kommunikationssystems, mit
Mitteln zum Empfangen (TRX) von Signalen zumindest eines ersten Dienstes (s1,s2,s3) in einem ersten Kanal, und
Mitteln zum Steuern (Ctrl) einer Unterbrechung (MES) des Empfangs der Signale für ein Durchführen von Messungen auf zumindest einem zweiten Kanal, **dadurch charakterisiert, dass** der Zeitpunkt der Unterbrechung abhängig von zumindest einer empfangenen dienst-individuellen Information ermittelt wird.

7. Eine Einrichtung mit Mitteln zum Aussenden von Signalen zumindest des ersten Dienstes (s1) in einem ersten Kanal und zumindest einer dem ersten Dienst (s1) zugeordneten individuellen Information über eine Funkschnittstelle zu zumindest zwei Teilnehmer-Endgeräten (UE1,UE2) zur Ermittlung eines Zeitpunktes einer Unterbrechung (MES) des Empfangs der Signale des ersten Dienstes (s1).

8. Basisstationssystem (BSS1) eines Funk-Kommunikationssystems, mit
einer ersten Einrichtung mit Mitteln (MOU) zum Aufbauen und Auslösen zumindest eines ersten Dienstes (s1,s2,s3), und
zumindest einer zweiten Einrichtung gemäß Anspruch 7.

9. Basisstationssystem (BSS1) nach Anspruch 8, wobei die erste Einrichtung als eine Basisstationssteuerung und die zumindest eine zweite Einrichtung eine Basisstation ausgestaltet sind.

10. Funk-Kommunikationssystem, mit zumindest einem Basisstationssystem (BSS1), bestehend aus zumindest einer Basisstationssteuerung und einer Basisstation, und zumindest einem Teilnehmer-Endgerät (UE1), wobei die Basisstationssteuerung Mittel (MOU) zum Aufbauen und Auslösen zumindest eines ersten Dienstes (s1,s2,s3), und die Basisstation Mittel zum Aussenden von Signalen zumindest des ersten Dienstes (s1) in einem ersten Kanal und zumindest einer dem ersten Dienst (s1) zugeordneten individuellen Information über eine Funkschnittstelle zu dem Teilnehmer-Endgerät (UE1) aufweisen, und wobei das Teilnehmer-Endgerät (UE1) Mittel zum Empfangen (TRX) der Signale des zumindest einen ersten Dienstes (s1,s2,s3) in dem ersten Kanal und Mittel zum Steuern (Ctrl) einer Unterbrechung (MES) des Empfangs der Signale für ein Durchführen von Messungen auf zumindest einem zweiten Kanalaufweist, wobei die Unterbrechung (MES) zeitgleich zu einer Unterbrechung (MES) zumindest eines ebenfalls Signale des ersten Dienstes (s1) empfangenden weiteren Teilnehmer-Endgerätes (UE2) gesteuert wird, und wobei der Zeitpunkt der Unterbrechung abhängig von der zumindest einen empfangenen dienstindividuellen Information ermittelt wird.

## Claims

1. Method for the performance of measurements by at least one subscriber terminal (UE1) in a radio communication system, in which
the subscriber terminal (UE1) receives signals from at least one first service (s1, s2, s3) in a first channel, and the subscriber terminal (UE1, UE2) interrupts the reception of the signals to perform measurements on at least one second channel, wherein the interruption (MES) occurs at the same time as an interruption (MES) by at least one further subscriber terminal (UE2) which is likewise receiving signals from the first service (s1), and **characterized in that** the subscriber terminals (UE1, UE2) ascertain the time of the interruption on the basis of at least one service-specific information item from the at least one first service (s1, s2, s3).

2. Method according to Claim 1, in which the interruption (MES) to the reception of signals from the at least one first service (s1, s2, s3) occurs on a service-specific basis.

3. Method according to Claim 1, in which
the interruption (MES) to the reception of signals from at least the first (s1) and a second service (s2) in the first channel occurs at the same time.

4. Method according to the preceding claim, in which
the subscriber terminal (UE1) has the service-specific information item signalled to it by a base station system in the radio communication system.

5. Method according to the preceding claim, in which the base station system signals service-specific information from the services (s1, s2, s3) currently received by the subscriber terminal (UE1) to the subscriber terminal (UE1) individually or by means of at least one broadcast message.

6. Subscriber terminal (UE1) in a radio communication system, having
means for receiving (TRX) signals from at least one first service (s1, s2, s3) in a first channel, and
means for controlling (Ctrl) an interruption (MES) to the reception of the signals to perform measurements on at least one second channel, **characterized in that** the time of the interruption is ascertained on the basis of at least one received service-specific information item.

7. Device having means for sending signals from at least the first service (s1 in a first channel and at least one individual information item associated with the first service (s1) via a radio interface to at least two subscriber terminals (UE1, UE2) to ascertain a time of an interruption (MES) to the reception of the signals from the first service (s1).

8. Base station system (BSS1) in a radio communication system, having
a first device having means (MOU) for setting up and initiating at least one first service (s1, s2, s3), and
at least one second device according to Claim 7.

9. Base station system (BSS1) according to Claim 8, wherein the first device is in the form of a base station controller and the at least one second device is in the form of a base station.

10. Radio communication system, having at least one base station system (BSS1), comprising at least one base station controller and a base station, and at least one subscriber terminal (UE1), wherein the base station controller has means (MOU) for setting up and initiating at least one first service (s1 s2, s3), and the base station has means for sending signals from at least the first service (s1) in a first channel and at least one individual information item associated with the first service (s1) via a radio interface to the subscriber terminal (UE1), and wherein the subscriber terminal (UE1) has means for receiving (TRX) the signals from the at least one first service (s1, s2, s3) in the first channel and means for controlling (Ctrl) an interruption (MES) to the reception of the signals to perform measurements on at least one second channel, wherein the interruption (MES) is controlled at the same time as an interruption (MES) by at least one further subscriber terminal (UE2) which is likewise receiving signals from the first service (s1), and wherein the time of the interruption is ascertained on the basis of the at least one received service-specific information item.

## Revendications

1. Procédé pour la réalisation de mesures par au moins un terminal d'usager (UE1) d'un système de radiocommunication, dans lequel
- le terminal d'usager (UE1) reçoit des signaux au moins d'un premier service (s1, s2, s3) dans un premier canal et
- le terminal d'usager (UE1, UE2) interrompt la réception des signaux pour la réalisation de mesures sur au moins un deuxième canal, l'interruption (MES) se produisant en même temps qu'une interruption (MES) au moins d'un autre terminal d'usager (UE2) qui reçoit également des signaux du premier service (s1),
**caractérisé en ce que** les terminaux d'usagers (UE1, UE2) déterminent l'instant de l'interruption en fonction d'au moins une information, individuelle au service, de l'au moins un premier service (s1, s2, s3).

2. Procédé selon la revendication 1, dans lequel l'interruption (MES) de la réception de signaux de l'au moins un premier service (s1, s2, s3) se produit individuellement par service.

3. Procédé selon la revendication 1, dans lequel l'interruption (MES) de la réception de signaux au moins du premier service (s1) et d'un deuxième service (s2) se produit simultanément dans le premier canal.

4. Procédé selon la revendication précédente, dans lequel l'information individuelle au service est signalée au terminal d'usager (UE1) par un système de stations de base du système de radiocommunication.

5. Procédé selon la revendication précédente, dans lequel le système de stations de base signale, individuellement ou au moyen d'au moins un message à diffusion générale adressé au terminal d'usager (UE1), des informations, individuelles au service, des services (s1, s2, s3) actuellement reçus par le terminal d'usager (UE1).

6. Terminal d'usager (UE1) d'un système de radiocommunication, avec des moyens (TRX) pour recevoir des signaux au moins d'un premier service (s1, s2, s3) dans un premier canal et des moyens (Ctrl) pour commander une interruption (MES) de la réception des signaux pour une réalisation de mesures sur au moins un deuxième canal, **caractérisé en ce que** l'instant de l'interruption est déterminé en fonction d'au moins une information reçue individuelle au service.

7. Dispositif avec des moyens pour envoyer à au moins deux terminaux d'usagers (UE1, UE2), via une interface radio, des signaux au moins du premier service (s1) dans un premier canal et au moins une information individuelle associée au premier service (s1) pour déterminer un instant d'une interruption (MES) de la réception des signaux du premier service (s1).

8. Système de stations de base (BSS1) d'un système de radiocommunication, avec un premier dispositif avec des moyens (MOU) pour établir et déclencher au moins un premier service (s1, s2, s3) et avec au moins un deuxième dispositif selon la revendication 7.

9. Système de stations de base (BSS1) selon la revendication 8, le premier dispositif étant conçu sous la forme d'une commande de station de base et l'au moins un deuxième dispositif, sous la forme d'une station de base.

10. Système de radiocommunication avec au moins un système de stations de base (BSS1) composé d'au moins une commande de station de base et d'une station de base et d'au moins un terminal d'usager (UE1), la commande de station de base comportant des moyens (MOU) pour établir et déclencher au moins un premier service (s1, s2, s3) et la station de base comportant des moyens pour envoyer au terminal d'usager (UE1), via une interface radio, des signaux au moins du premier service (s1) dans un premier canal et au moins une information individuelle associée au premier service (s1) et le terminal d'usager (UE1) comportant des moyens (TRX) pour recevoir les signaux de l'au moins un premier service (s1, s2, s3) dans le premier canal et des moyens (Ctrl) pour commander une interruption (MES) de la réception des signaux pour une réalisation de mesures sur au moins un deuxième canal, l'interruption (MES) étant commandée en même temps qu'une interruption (MES) au moins d'un autre terminal d'usager (UE2) qui reçoit également des signaux du premier service (s1) et l'instant de l'interruption étant déterminé en fonction de l'au moins une information reçue individuelle au service.
